# FASCICULE DE BREVET EUROPEEN

(11) **EP 3 793 903 B1**
(45) Date de publication et mention de la délivrance du brevet: **29.06.2022**
(21) Numéro de dépôt: 19730197.1
(22) Date de dépôt: 09.05.2019
(51) Int. Cl.: F01D 15/10, B64D 33/00, B64D 27/02, F02C 7/275, F02C 7/36, B64C 27/04, B64D 35/04, F02C 3/10, F02C 7/32

(54) **ARCHITECTURE DE PUISSANCE D'UN AERONEF**
FLUGZEUGLEISTUNGSARCHITEKTUR
AIRCRAFT POWER ARCHITECTURE

(30) Priorité: 18.05.2018 FR 1854151
(43) Date de publication de la demande: 24.03.2021
(73) Titulaire: Safran Helicopter Engines, 64510 Bordes (FR)
(72) Inventeur: LAFARGUE, Olivier, 77550 Moissy-Cramayel (FR); KLONOWSKI, Thomas, 77550 Moissy-Cramayel (FR)
(74) Mandataire: Gevers & Orès
(86) Numéro de dépôt international: PCT/FR2019/051051
(87) Numéro de publication internationale: WO 2019/220038

(56) Documents cités:
- EP-A1- 2 974 964
- FR-A1- 2 914 697
- FR-A1- 2 962 404
- FR-A1- 2 992 630
- FR-A1- 3 003 514
- FR-A1- 3 019 219

## Description

### 1. Domaine technique de l'invention

L'invention concerne une architecture de puissance d'un aéronef. En particulier, l'invention concerne une architecture comprenant une turbine à gaz et une boite de transmission de puissance, par exemple une boite de transmission principale d'un hélicoptère ou d'un autre aéronef à voilure tournante (architecture turbomoteur), ou une boite de transmission d'un aéronef à voilure fixe à hélice (architecture turbopropulseur).

### 2. Arrière-plan technologique

L'état de la technique comporte notamment les demande de brevet EP-A1-2 974 964, FR-A1-3 003 514, FR-A1-3 019 219, FR-A1-2 992 630, FR-A1-2 914 697 et FR-A1-2 962 404.

L'architecture de puissance d'un aéronef désigne l'architecture permettant la production d'une énergie propulsive de l'aéronef et sa transmission à l'élément propulseur via une boite de transmission de puissance, l'élément propulseur étant par exemple une voilure tournante ou une hélice.

L'architecture de puissance comprend une turbine à gaz permettant la production de cette énergie propulsive transmise à la boite de transmission de puissance, qui se sert de cette puissance pour faire tourner l'élément propulseur via un rotor.

L'installation de la turbine à gaz dans l'aéronef répond à une multitude de contraintes, notamment en termes d'encombrement et de maintien de la turbine à gaz en place dans l'aéronef.

Traditionnellement, les turbines à gaz sont attachées au moins à un plancher mécanique d'un compartiment moteur de l'aéronef, et de préférence attachées aussi à la boite de transmission de puissance puisque l'objectif est de transmettre l'énergie générée par la turbine à gaz à cette boite de transmission de puissance. Pour gérer les déplacements relatifs de la turbine à gaz par rapport à la boite de transmission de puissance, les attaches sont complexifiées par l'ajout de bielles, cardans, rotules, et système de récupération de désalignement qui augmentent la masse de l'architecture.

Pour réduire la masse et limiter la complexité de l'attache, il a été proposé comme solution d'encastrer directement la turbine à gaz à la boite de transmission de puissance via l'arbre de puissance de la turbine libre de la turbine à gaz et d'ajouter des systèmes de maintien entre la turbine à gaz et la boite de transmission de puissance. Il n'est ainsi plus nécessaire de gérer les désalignements entre la turbine à gaz et la boite de transmission de puissance.

Toutefois, dans cette configuration, la turbine à gaz n'est tenue en place qu'au niveau d'une de ces extrémités. L'autre extrémité est ainsi en porte-à-faux et un surplus de masse peut entrainer de fortes contraintes mécaniques au niveau de la liaison avec la boite de transmission principale. En particulier, certains équipements liés à la turbine à gaz, par exemple des pompes à huile, pompe à carburant, groupe de refroidissement, dégazeur, alternateur, etc., ainsi que le démarreur/générateur de la turbine à gaz, ou des équipements externes sont tous reliés à une boite dite boite accessoire, récupérant une partie de l'énergie générée par la turbine à gaz. Cette boite accessoire et tous ces équipements sont fixés autour de la turbine à gaz pour bénéficier de son énergie produite, et représentent une masse importante dans cette configuration en porte-à-faux.

Les inventeurs ont donc cherché une solution à ces inconvénients.

### 3. Objectifs de l'invention

L'invention vise à pallier au moins certains des inconvénients des architectures de puissance connues.

En particulier, l'invention vise à fournir, dans au moins un mode de réalisation de l'invention, une architecture de puissance permettant de réduire la masse en porte-à-faux dans les configurations où la turbine à gaz est solidaire de la boite de transmission de puissance.

L'invention vise aussi à fournir, dans au moins un mode de réalisation, une architecture de puissance à masse et complexité réduite.

L'invention vise aussi à fournir, dans au moins un mode de réalisation de l'invention, une architecture de puissance pouvant bénéficier de l'assistance d'un réseau de bord de l'aéronef.

L'invention vise aussi à fournir, dans au moins un mode de réalisation de l'invention, une architecture de puissance permettant de réduire les contraintes appliquées à la boite accessoire.

### 4. Exposé de l'invention

Pour ce faire, l'invention concerne une architecture de puissance d'un aéronef, selon la revendication 1, comprenant :
- une boite de transmission de puissance, disposée dans un premier compartiment, et configurée pour transmettre une énergie mécanique à un rotor,
- une turbine à gaz, disposée dans un deuxième compartiment séparé du premier compartiment par une cloison, comprenant un générateur de gaz et une turbine libre reliée à la boite de transmission de puissance par un arbre de puissance de la turbine à gaz,
- une boite accessoire, configurée pour alimenter en énergie des équipements accessoires en prélevant une partie de l'énergie produite par le générateur de gaz,
la turbine à gaz étant attachée dans l'aéronef via l'arbre de puissance encastré dans la boite de transmission principale et via un système de maintien reliant la turbine à gaz à la boite de transmission principale,
- la turbine à gaz comprend une première machine électrique configurée pour prélever une partie de l'énergie produite par le générateur de gaz et la convertir en énergie électrique lorsque la turbine à gaz est en marche,
- la boite accessoire est disposée dans le premier compartiment et comprend une deuxième machine électrique configurée pour fournir de l'énergie aux équipements accessoires et pour recevoir de l'énergie électrique transmise par le démarreur/générateur lorsque la turbine à gaz est en marche.

Une architecture de puissance selon l'invention permet donc de réduire la masse en porte-à-faux de la turbine à gaz par déplacement de la boite accessoire de la turbine à gaz à un autre endroit, à l'occurrence dans un autre compartiment.

Pour faire en sorte que la boite accessoire fonctionne toujours grâce à une partie de l'énergie générée par la turbine à gaz, une première machine électrique par exemple un démarreur/générateur, est installée sur la turbine à gaz et lorsque celle-ci est en fonctionnement, la première machine électrique fonctionne en mode générateur et permet d'alimenter la boite accessoire.

Cette configuration est permise grâce à l'amélioration des performances des équipements électriques comme un démarreur/générateur, notamment la réduction de la masse des équipements électriques par rapport à la puissance produite (dans le cas d'un générateur) ou consommée (dans le cas d'un moteur électrique),

Le déplacement de la boite accessoire dans le premier compartiment entraine d'autres avantages. Le deuxième compartiment comprenant la turbine à gaz est considéré comme une « zone chaude » de l'aéronef, car les températures qui y règnent sont élevées du fait du fonctionnement de la turbine à gaz, alors que le premier compartiment est considéré comme une « zone froide » car il ne contient pas de composant générant beaucoup de chaleur. La cloison entre le premier compartiment et le deuxième compartiment permet de conserver ces différences de températures.

Pour les même raisons, le premier compartiment est moins soumis aux contraintes de vibration et de pollution (nuages d'huile par exemple) que le deuxième compartiment qui comprend la turbine à gaz.

Ainsi, la boite accessoire subit des contraintes réduites en termes de température, vibration et pollution, présentant ainsi une meilleure fiabilité. En outre, elle est ainsi plus proche de l'axe du rotor ce qui entraine un recentrage de masse dans l'aéronef et réduit les déséquilibres.

Par transmission d'énergie électrique ou mécanique, la boite accessoire permet tout de même de fournir de l'énergie à des équipements situés dans le deuxième compartiment, par exemple des équipements nécessaires au fonctionnement de la turbine à gaz tels que des pompes à huile, pompe à carburant, groupe de refroidissement, dégazeur, alternateur, etc.

Avantageusement et selon l'invention, la turbine à gaz peut être attachée dans l'aéronef uniquement via l'arbre de puissance encastré dans la boite de transmission principale et via un système de maintien reliant la turbine à gaz à la boite de transmission principale.

Avantageusement et selon l'invention, le rotor supporte une voilure tournante ou une hélice.

Selon cet aspect de l'invention, l'architecture de puissance est destinée à la sustentation et/ou la propulsion de l'aéronef grâce à une voilure tournante ou une hélice.

Avantageusement et selon l'invention, la première machine électrique est un démarreur/générateur.

Selon cet aspect de l'invention, la première machine électrique est également configurée pour démarrer le générateur de gaz lorsque la turbine à gaz est éteinte ou en veille.

Avantageusement et selon l'invention, la deuxième machine électrique est un moteur électrique.

Avantageusement et selon l'invention, la première machine électrique et la deuxième machine électrique sont des machines électriques sans balais et configurées pour fonctionner à une vitesse nominale supérieure à 50000 tours par minute.

Selon cet aspect de l'invention, l'utilisation de telles machines électriques permet une réduction importante de la masse de l'architecture de puissance, et participe notamment à la réduction de la masse en porte-à-faux sur la turbine à gaz.

Avantageusement et selon l'invention, les équipements accessoires comprennent une pompe à carburant et une pompe à huile de la turbine à gaz, lesdites pompes étant disposées dans le deuxième compartiment.

Selon cet aspect de l'invention, les équipements accessoires reliés au fonctionnement de la turbine à gaz peuvent être disposés dans le deuxième compartiment à proximité de la turbine à gaz, la boite accessoire restant dans le premier compartiment. D'autres équipements accessoires peuvent aussi être disposés dans le deuxième compartiment lorsqu'ils sont liés au fonctionnement direct de la turbine à gaz, par exemple un ventilateur de groupe de refroidissement d'huile, un compresseur de climatisation, etc.).

Avantageusement et selon ce dernier aspect de l'invention, la pompe à carburant et la pompe à huile de la turbine à gaz sont électriques et alimentées par une énergie électrique fournie par la boite accessoire.

Selon cet aspect de l'invention, l'utilisation de pompes électriques réduit la masse de l'architecture de puissance et facilite la transmission d'énergie entre les deux compartiments.

Avantageusement et selon l'invention, la première machine électrique et la deuxième machine électrique sont configurées pour recevoir ou fournir de l'énergie électrique à un réseau de bord électrique de l'aéronef.

Selon cet aspect de l'invention, lorsque la première machine électrique est un démarreur/générateur , la première machine électrique peut, en fonctionnement démarreur, utiliser de l'énergie électrique du réseau de bord de l'aéronef pour démarrer la turbine à gaz, et en fonctionnement générateur, fournir de l'énergie électrique au réseau de bord pour alimenter d'autres équipements de l'aéronef.

Avantageusement et selon l'invention, le générateur de gaz comprend une turbine haute pression directement reliée à la turbine libre.

Dans cette architecture de type « turbines liées », l'arbre du générateur de gaz et l'arbre de puissance sont reliés mécaniquement.

Avantageusement et selon l'invention, la boite de transmission de puissance comprend des éléments de transmission comportant des engrenages coniques.

Selon cet aspect de l'invention, les éléments de transmission sont configurés pour ajuster la vitesse de rotation du rotor, même lorsque la boite de transmission de puissance et la turbine à gaz sont orientés selon un angle quelconque.

L'invention concerne également un aéronef comprenant un rotor connecté à une voilure tournante ou une hélice, caractérisé en ce que le rotor est entrainé en rotation par une architecture de puissance selon l'invention.

Avantageusement et selon l'invention, la turbine à gaz est orientée avec un angle quelconque par rapport à l'axe de rotation de la voilure tournante ou de l'hélice.

L'invention concerne également une architecture de puissance et un aéronef caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en coupe partielle d'une architecture de puissance selon un premier mode de réalisation de l'invention,
- la figure 2 est une vue schématique en coupe partielle d'une architecture de puissance selon un deuxième mode de réalisation de l'invention,
- la figure 3 est une vue schématique de l'architecture électrique d'une architecture de puissance selon un mode de réalisation de l'invention.

### 6. Description détaillée d'un mode de réalisation de l'invention

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées pour fournir d'autres réalisations. Sur les figures, les échelles et les proportions ne sont pas strictement respectées et ce, à des fins d'illustration et de clarté.

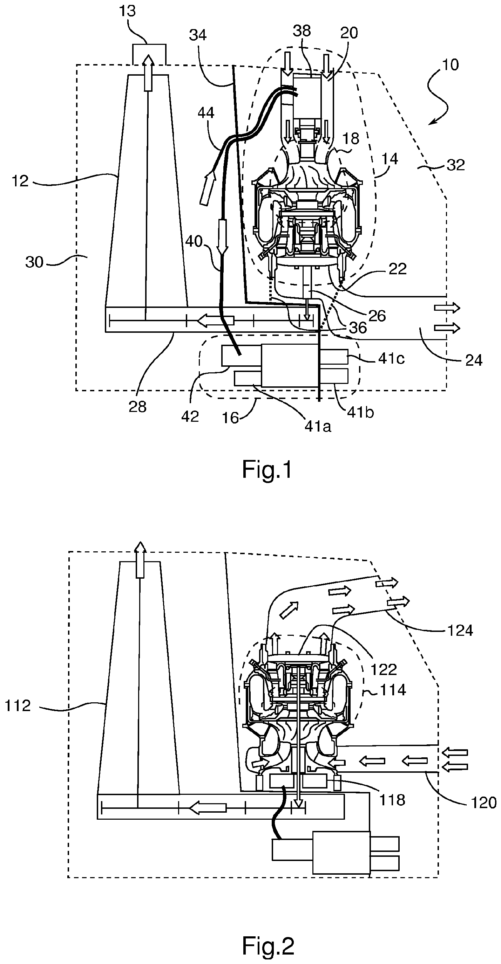

La figure 1 représente schématiquement en coupe partielle une architecture 10 de puissance d'un aéronef selon un premier mode de réalisation de l'invention.

L'architecture 10 de puissance comprend notamment une boite 12 de transmission de puissance, une turbine 14 à gaz et une boite 16 accessoire.

La boite 12 de transmission de puissance permet la transmission d'énergie générée par la turbine à gaz vers un élément propulseur tournant autour d'un rotor 13 entrainé par la boite 12 de transmission de puissance, par exemple une voilure tournante ou une hélice de propulsion. Lorsque l'aéronef est un hélicoptère, la boite de transmission de puissance est généralement appelée boite de transmission principale (abrégé BTP).

La turbine 14 à gaz comprend un générateur 18 de gaz, produisant de façon connue un flux de gaz à partir de la compression et combustion d'air provenant d'une entrée 20 d'air. Le flux de gaz est détendu par une première turbine du générateur 18 de gaz pour permettre sa rotation propre, puis dans une turbine 22 libre de la turbine 14 à gaz. En sortie de turbine libre, les gaz d'échappement sont évacués par une sortie 24 de gaz d'échappement.

La turbine 14 à gaz comprend en outre un arbre 26 de puissance reliant la turbine 22 libre à la boite 12 de transmission de puissance et permettant la transmission de la puissance entre ces deux éléments. La boite 12 de transmission de puissance comprend généralement un ensemble d'éléments 28 de transmission, par exemple un train épicycloïdal, en particulier un réducteur planétaire ou une chaine de pignons à dentures extérieures classiques, permettant d'ajuster la vitesse de rotation du rotor 13.

Selon la disposition relative de la boite 12 de transmission de puissance et de la turbine 14 à gaz, les éléments 28 de transmission peuvent permettre aussi de transmettre la puissance alors que la boite 12 de transmission principale et la turbine à gaz n'ont pas le même sens de rotation (par exemple s'ils sont perpendiculaires ou selon un angle quelconque). Les éléments 28 de transmission peuvent par exemple comprendre des engrenages à axe concourants de type engrenages coniques.

La boite 12 de transmission de puissance est disposée dans un premier compartiment 30 tandis que la turbine 14 à gaz est disposée dans un deuxième compartiment 32, le premier compartiment 30 et le deuxième compartiment 32 étant séparés par une cloison 34. Pour éviter les problèmes mécaniques dus aux mouvements relatifs des deux compartiments, la turbine 14 à gaz est encastrée dans la boite 12 de transmission principale, d'une part via l'arbre de puissance, d'autre part via un système 36 de maintien reliant directement la turbine 14 à gaz à la boite 12 de transmission principale.

Le deuxième compartiment 32 est un compartiment dit « chaud » car il comprend la turbine 14 à gaz qui est une forte source de chaleur du fait de la combustion de carburant qui s'y déroule. Le deuxième compartiment 32 est par ailleurs soumis à des vibrations et une pollution (carburant, huile, etc.) pour les même raisons. Le premier compartiment 30 est un compartiment dit « froid » en comparaison, puisqu'aucune réaction thermique d'une telle ampleur n'y a lieu.

Dans les architectures de puissance selon l'art antérieur, la boite accessoire était fixée directement à la turbine à gaz et reliée à un arbre du générateur de gaz pour prélever une partie de l'énergie qu'il produit, de préférence du côté de l'entrée d'air. Dans la configuration ou l'on encastre la turbine à gaz dans la boite de transmission de puissance, la masse de la boite accessoire est donc en porte-à-faux et pose des problèmes structurels et de contraintes.

Pour résoudre ces problèmes, la boite 16 accessoire est déportée et disposée dans le premier compartiment. Pour permettre l'alimentation en énergie d'équipements 41a, 41b, 41c accessoires, elle prélève de l'énergie produite par le générateur de gaz, non pas directement comme dans l'art antérieur, mais via une première machine électrique, par exemple un démarreur/générateur 38, fixée à l'arbre du générateur de gaz et produisant de l'énergie électrique lorsque la turbine 14 à gaz est en fonctionnement ; l'énergie électrique est transmise via une connexion 40 électrique à une deuxième machine électrique, par exemple un moteur 42 électrique, de la boite accessoire. Ce moteur 42 électrique permet de transformer l'énergie électrique reçue en énergie mécanique pouvant alimenter les équipements accessoires. La boite accessoire peut aussi transmettre directement de l'énergie électrique à des équipements fonctionnant à l'électricité, par exemple la pompe à carburant et la pompe à huile de la turbine à gaz qui peuvent être électriques.

Dans la suite de la description, la première machine électrique sera décrite comme étant un démarreur/générateur, et la deuxième machine électrique sera décrite comme étant un moteur électrique. Bien entendu, les première et deuxième machines électriques ne sont pas limitées à ces exemples.

Le démarreur/générateur 38 peut aussi permettre le démarrage de la turbine 14 à gaz lorsqu'elle est éteinte ou en veille. Pour ce faire, le démarreur/générateur peut être relié à un réseau de bord via une connexion 44 électrique, ou alternativement à une autre source d'alimentation électrique, par exemple une batterie.

Le démarreur/générateur 38 est généralement disposé en amont du générateur de gaz, au niveau de l'entrée 20 d'air, notamment pour des raisons de contraintes thermiques.

Le démarreur/générateur 38 et le moteur 42 électrique sont de préférence des machines électriques sans balais et haute vitesse de rotation (supérieure à 50000 tours par minute). Dans l'art antérieur, ces moteurs étaient généralement des moteurs avec balais et à basse vitesse de rotation (environ 12000 tours par minute) : l'utilisation de moteurs sans balais permet de réduire la masse du démarreur/générateur et du moteur électrique par rapport à l'art antérieur. Cette utilisation de machines électriques sans balais et haute vitesse de rotation est notamment permise par l'utilisation de technologies de type Mosfet SiC ou GaN avec des cœurs numériques très haut débit. Les thyristor ou IGBT de l'art antérieur n'ont pas les capacités technologiques pour pouvoir piloter des machines électriques sans balais à des vitesses aussi élevées.

La figure 2 représente schématiquement en coupe partielle une architecture de puissance selon un deuxième mode de réalisation de l'invention.

Dans ce mode de réalisation, la turbine 114 à gaz est disposée dans une orientation opposée au premier mode de réalisation : l'entrée 120 d'air et la sortie 124 de gaz d'échappement sont inversées, et la turbine 122 libre se retrouve à l'extrémité opposé de la turbine 114 à gaz par rapport à la boite 112 de transmission principale. Ainsi, pour encastrer la turbine 114 à gaz, l'arbre 126 de puissance est dit traversant car il traverse la turbine 114 à gaz pour aller retrouver la boite 112 de transmission principale. La première machine électrique, ici un démarreur/générateur 138, est toujours disposée du côté de l'entrée de l'air. Le reste du fonctionnement est similaire à l'architecture de puissance selon le premier mode de réalisation de l'invention.

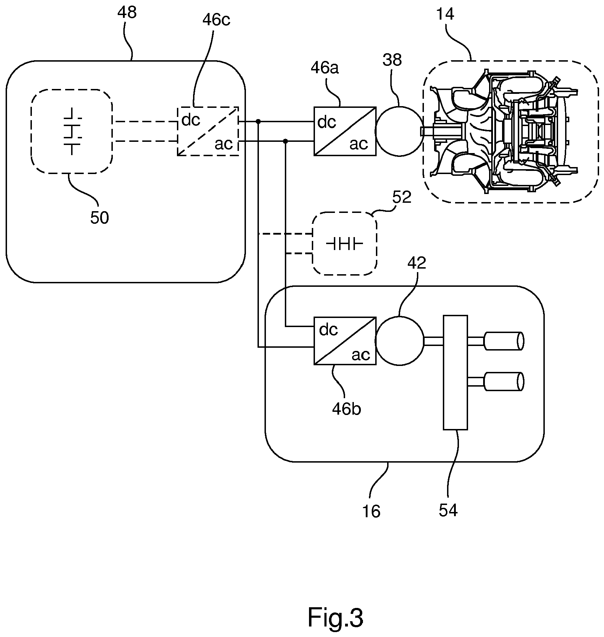

La figure 3 représente schématiquement l'architecture électrique d'une architecture de puissance selon un mode de réalisation de l'invention.

Comme représenté dans les figures 1 et 2, le démarreur/générateur 38 récupère une partie de l'énergie produite par le générateur de gaz de la turbine 14 à gaz. Pour la transmission de l'énergie électrique ainsi produite, l'architecture électrique comprend un convertisseur 46a électrique fonctionnement en mode AC/DC (redresseur) du démarreur/générateur 38 vers le réseau électrique et en mode DC/AC (onduleur) du réseau électrique au démarreur/générateur 38. Le réseau électrique est formé de toutes les connexions avec les autres équipements électriques reliés, en particulier avec le moteur 42 électrique connecté lui aussi via un convertisseur 46b électrique (onduleur ou redresseur), et avec le réseau 48 de bord via un convertisseur 46c électrique de type DC/DC (hacheur). En particulier, le hacheur peut être un convertisseur bidirectionnel de type résonant et Buck-Boost. Le réseau 48 de bord comprend un élément 50 de stockage d'énergie.

Le moteur 42 électrique, recevant de l'énergie électrique du démarreur/générateur 38, peut ainsi alimenter en énergie mécanique des équipements accessoires, par exemple via des engrenages 54.

La connexion au réseau 48 de bord n'est pas obligatoire dans l'architecture électrique de l'architecture de puissance selon l'invention.

Selon les modes de réalisation de l'invention, l'architecture électrique peut aussi comprendre un stockage 52 tampon.

## Revendications

1. Architecture de puissance d'un aéronef, comprenant :
- une boite (12) de transmission de puissance, disposée dans un premier compartiment (30), et configurée pour transmettre une énergie mécanique à un rotor (13),
- une turbine (14) à gaz comprenant un générateur (18) de gaz et une turbine (22) libre reliée à la boite (12) de transmission de puissance par un arbre (26) de puissance de la turbine (14) à gaz,
- une boite (16) accessoire, configurée pour alimenter en énergie des équipements accessoires en prélevant une partie de l'énergie produite par le générateur (18) de gaz,
- la turbine (14) à gaz comprend une première machine électrique (38) configurée pour prélever une partie de l'énergie produite par le générateur (18) de gaz et la convertir en énergie électrique lorsque la turbine (14) à gaz est en marche,
- la boite (16) accessoire comprend une deuxième machine électrique (42) configurée pour fournir de l'énergie aux équipements accessoires et pour recevoir de l'énergie électrique transmise par la première machine électrique (38) lorsque la turbine (14) à gaz est en marche,
**caractérisée en ce que**
- la turbine a gaz est disposée dans un deuxième compartiment (32) séparé du premier compartiment (30) par une cloison (34),
- la boîte accessoire est disposée dans le premier compartiment (30),
- la turbine (14) à gaz est attachée dans l'aéronef via l'arbre (26) de puissance encastré dans la boite (12) de transmission principale et via un système (36) de maintien reliant la turbine (14) à gaz à la boite (12) de transmission principale.

2. Architecture de puissance selon la revendication 1, **caractérisée en ce que** le rotor (13) supporte une voilure tournante ou une hélice.

3. Architecture de puissance selon l'une des revendications 1 ou 2, **caractérisée en ce que** la première machine électrique (38) est également configurée pour démarrer le générateur (18) de gaz lorsque la turbine (14) à gaz est éteinte ou en veille.

4. Architecture de puissance selon l'une des revendications 1 à 3, **caractérisée en ce que** la première machine électrique (38) et la deuxième machine électrique (42) sont des machines électriques sans balais et configurées pour fonctionner à une vitesse nominale supérieure à 50000 tours par minute.

5. Architecture de puissance selon l'une des revendications 1 à 4, **caractérisée en ce que** les équipements accessoires comprennent une pompe à carburant et une pompe à huile de la turbine à gaz, lesdites pompes étant disposées dans le deuxième compartiment.

6. Architecture de puissance selon la revendication 5, **caractérisée en ce que** la pompe à carburant et la pompe à huile de la turbine à gaz sont électriques et alimentées par une énergie électrique fournie par la boite (16) accessoire.

7. Architecture de puissance selon l'une des revendications 1 à 6, **caractérisée en ce que** la première machine électrique (38) et la deuxième machine électrique (42) sont configurées pour recevoir ou fournir de l'énergie électrique à un réseau (48) de bord électrique de l'aéronef.

8. Architecture de puissance selon l'une des revendications 1 à 7, **caractérisée en ce que** le générateur (18) de gaz comprend une turbine haute pression directement reliée à la turbine libre.

9. Architecture de puissance selon l'une des revendications 1 à 8, **caractérisée en ce que** la boite (12) de transmission de puissance comprend des éléments (28) de transmission comportant des engrenages coniques.

10. Aéronef, comprenant un rotor connecté à une voilure tournante ou une hélice, **caractérisé en ce que** le rotor est entrainé en rotation par une architecture de puissance selon l'une des revendications 1 ou 3 à 9.

11. Aéronef selon la revendication 10, **caractérisé en ce que** la turbine (14) à gaz est orientée avec un angle quelconque par rapport à l'axe de rotation de la voilure tournante ou de l'hélice.

## Patentansprüche

1. Leistungsarchitektur eines Luftfahrzeugs, umfassend:
- ein Leistungsgetriebe (12), das in einem ersten Raum (30) angeordnet und zum Übertragen einer mechanischen Energie an einen Rotor (13) konfiguriert ist,
- eine Gasturbine (14), umfassend einen Gasgenerator (18) und eine Freiwellenturbine (22), die über eine Leistungswelle (26) der Gasturbine (14) mit dem Leistungsgetriebe (12) verbunden ist,
- ein Hilfsgerätegetriebe (16), das zur Energieversorgung von Hilfsgeräten durch Entnahme eines Teils der von dem Gasgenerator (18) erzeugten Energie konfiguriert ist,
- die Gasturbine (14) umfasst eine erste elektrische Maschine (38), die zur Entnahme eines Teils der von dem Gasgenerator (18) erzeugten Energie und zum Umwandeln dieser Energie in elektrische Energie konfiguriert ist, wenn die Gasturbine (14) in Betrieb ist,
- das Hilfsgerätegetriebe (16) umfasst eine zweite elektrische Maschine (42), die zur Energieversorgung der Hilfsgeräte und zur Aufnahme von elektrischer Energie konfiguriert ist, die von der ersten elektrischen Maschine (38) übertragen wird, wenn die Gasturbine (14) in Betrieb ist,
**dadurch gekennzeichnet, dass**
- die Gasturbine in einem zweiten Raum (32) angeordnet ist, der durch eine Trennwand (34) von dem ersten Raum (30) getrennt ist,
- das Hilfsgerätegetriebe in dem ersten Raum (30) angeordnet ist,
- die Gasturbine (14) im Luftfahrzeug über die in das Hauptgetriebe (12) eingefasste Leistungswelle (26) und über ein Haltesystem (36), das die Gasturbine (14) mit dem Hauptgetriebe (12) verbindet, befestigt ist.

2. Leistungsarchitektur nach Anspruch 1, **dadurch gekennzeichnet, dass** der Rotor (13) einen Drehflügel oder einen Propeller trägt.

3. Leistungsarchitektur nach einem der Ansprüche 1 oder 2, **dadurch gekennzeichnet, dass** die erste elektrische Maschine (38) auch zum Starten des Gasgenerators (18) konfiguriert ist, wenn die Gasturbine (14) ausgeschaltet ist oder sich im Standby-Modus befindet.

4. Leistungsarchitektur nach einem der Ansprüche 1 bis 3, **dadurch gekennzeichnet, dass** die erste elektrische Maschine (38) und die zweite elektrische Maschine (42) bürstenlose elektrische Maschinen sind und für den Betrieb bei einer Nenndrehzahl von mehr als 50000 Umdrehungen pro Minute konfiguriert sind.

5. Leistungsarchitektur nach einem der Ansprüche 1 bis 4, **dadurch gekennzeichnet, dass** die Hilfsgeräte eine Kraftstoffpumpe und eine Ölpumpe der Gasturbine umfassen, wobei diese Pumpen in dem zweiten Raum angeordnet sind.

6. Leistungsarchitektur nach Anspruch 5, **dadurch gekennzeichnet, dass** die Kraftstoffpumpe und die Ölpumpe der Gasturbine elektrisch sind und mit elektrischer Energie versorgt werden, die von dem Hilfsgerätegetriebe (16) erzeugt wird.

7. Leistungsarchitektur nach einem der Ansprüche 1 bis 6, **dadurch gekennzeichnet, dass** die erste elektrische Maschine (38) und die zweite elektrische Maschine (42) zur Aufnahme oder Abgabe von elektrischer Energie an ein elektrisches Bordnetz (48) des Luftfahrzeugs konfiguriert sind.

8. Leistungsarchitektur nach einem der Ansprüche 1 bis 7, **dadurch gekennzeichnet, dass** der Gasgenerator (18) eine Hochdruckturbine umfasst, die direkt mit der Freiwellenturbine verbunden ist.

9. Leistungsarchitektur nach einem der Ansprüche 1 bis 8, **dadurch gekennzeichnet, dass** das Leistungsgetriebe (12) Antriebselemente (28) mit Kegelradgetrieben umfasst.

10. Luftfahrzeug, umfassend einen Rotor, der mit einem Drehflügel oder einem Propeller verbunden ist, **dadurch gekennzeichnet, dass** der Rotor durch eine Leistungsarchitektur nach einem der Ansprüche 1 oder 3 bis 9 in Drehung versetzt wird.

11. Luftfahrzeug nach Anspruch 10, **dadurch gekennzeichnet, dass** die Gasturbine (14) in einem beliebigen Winkel zur Drehachse des Drehflügels oder des Propellers ausgerichtet ist.

## Claims

1. An aircraft power architecture, comprising:
- a power transmission gearbox (12), located in a first compartment (30), and configured to transmit mechanical energy to a rotor (13),
- a gas turbine (14) comprising a gas generator (18) and a free turbine (22) connected to the power transmission gearbox (12) by a power shaft (26) of the gas turbine (14),
- an accessory gearbox (16), configured to supply energy to accessory equipment by taking part of the energy produced by the gas generator (18),
- the gas turbine (14) comprises a first electrical machine (38) configured to take a part of the energy produced by the gas generator (18) and convert it into electrical energy when the gas turbine (14) is running,
- the accessory gearbox (16) comprises a second electrical machine (42) configured to supply power to the accessory equipment and to receive electrical energy transmitted by the first electrical machine (38) when the gas turbine (14) is running.
**characterized in that**:
- the gas turbine (14) is located in a second compartment (32) separated from the first compartment (30) by a partition (34),
- the accessory gearbox (16) is located in the first compartment (30),
- the gas turbine (14) being attached in the aircraft via the power shaft (26) being set in the main transmission gearbox (12) and via a holding system (36) connecting the gas turbine (14) to the main transmission gearbox (12).

2. The power architecture according to claim 1, **characterized in that** the rotor (13) supports a rotary wing or a propeller.

3. The power architecture according to one of claims 1 or 2, **characterized in that** the first electrical machine (38) is also configured to start the gas generator (18) when the gas turbine (14) is switched off or on standby mode.

4. The power architecture according to one of claims 1 to 3, **characterized in that** the first electrical machine (38) and the second electrical machine (42) are brushless electrical machines and configured to operate at a rated speed of more than 50,000 rpm.

5. The power architecture according to one of claims 1 to 4, **characterized in that** the accessory equipment comprises a fuel pump and an oil pump of the gas turbine, said pumps being located in the second compartment.

6. The power architecture according to claim 5, **characterized in that** the fuel pump and the oil pump of the gas turbine are electric and are powered by an electric energy supplied by the accessory gearbox (16).

7. The power architecture according to one of claims 1 to 6, **characterized in that** the first electrical machine (38) and the second electrical machine (42) are configured to receive or supply the electrical energy to an on-board electrical network (48) of the aircraft.

8. The power architecture according to one of claims 1 to 7, **characterized in that** the gas generator (18) comprises a high-pressure turbine directly connected to the free turbine.

9. The power architecture according to one of claims 1 to 8, **characterized in that** the power transmission gearbox (12) comprises transmission elements (28) comprising bevel gears.

10. An aircraft, comprising a rotor connected to a rotary wing or a propeller, **characterized in that** the rotor is driven in rotation by a power architecture according to one of claims 1 or 3 to 9.

11. The aircraft according to claim 10, **characterized in that** the gas turbine (14) is oriented at any angle with respect to the axis of rotation of the rotary wing or the propeller.
